(19) Europäisches Patentamt
European Patent Office
Office européen des brevets

(11) **EP 4 180 240 A1**

(12) **EUROPEAN PATENT APPLICATION**

(43) Date of publication:
**17.05.2023 Bulletin 2023/20**

(21) Application number: **22202356.6**

(22) Date of filing: **19.10.2022**

(51) International Patent Classification (IPC):
**B60C 1/00** *(2006.01)*      **C08L 7/00** *(2006.01)*
**C08L 9/00** *(2006.01)*      **C08C 19/02** *(2006.01)*
**C08F 236/10** *(2006.01)*

(52) Cooperative Patent Classification (CPC):
(C-Sets available)
**C08L 7/00; B60C 1/0025; C08L 9/00;** C08C 19/02;
C08F 236/10                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.11.2021  JP 2021184150
20.06.2022  JP 2022098993**

(71) Applicant: **Sumitomo Rubber Industries, Ltd.
Kobe-shi, Hyogo 651-0072 (JP)**

(72) Inventor: **HAMAMURA, Kenji
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(54)  **TIRE**

(57)    An object of the present invention is to provide a tire having improved ride comfort. Provided is a tire comprising a sidewall, wherein the sidewall is composed of a rubber composition comprising a rubber component, and wherein, when an aromatic vinyl unit content in the rubber component is defined as S (% by mass) and a thickness of a surface rubber layer at a tire maximum width position is defined as T(mm), S is 0.50% by mass or more and 5.0% by mass or less, and S/T is 0.045 or more and 3.33 or less.

EP 4 180 240 A1

(52) Cooperative Patent Classification (CPC): (Cont.)

C-Sets
**C08L 7/00, C08L 9/00, C08L 9/06, C08L 91/00,**
**C08L 91/06, C08K 3/04, C08K 3/36, C08K 5/548,**
**C08K 5/18, C08K 5/3437, C08K 3/22, C08K 5/09,**
**C08K 3/06, C08K 5/47;**
**C08L 7/00, C08L 9/00, C08L 9/06, C08L 91/00,**
**C08L 91/06, C08K 3/04, C08K 5/18,**
**C08K 5/3437, C08K 3/22, C08K 5/09, C08K 3/06,**
**C08K 5/47;**
**C08L 7/00, C08L 9/00, C08L 15/00, C08L 91/00,**
**C08L 91/06, C08K 3/04, C08K 5/18,**
**C08K 5/3437, C08K 3/22, C08K 5/09, C08K 3/06,**
**C08K 5/47;**
**C08L 9/00, C08L 7/00, C08L 15/00, C08L 91/00,**
**C08L 91/06, C08K 3/04, C08K 5/18,**
**C08K 5/3437, C08K 3/22, C08K 5/09, C08K 3/06,**
**C08K 5/47;**
C08F 236/10, C08F 2/06;
C08F 236/10, C08F 4/48;
C08F 236/10, C08F 212/08

**Description**

TECHNICAL FIELD

The present invention relates to a tire.

BACKGROUND OF THE INVENTION

It is known that a sidewall has a great influence on ride comfort. JP 2013-1889 A describes a tire comprising a sidewall composed of a rubber composition that comprises a butadiene rubber including a predetermined amount of 1, 2-syndiotactic polybutadiene crystal, a terminal-modified butadiene rubber, an isoprene-based rubber, and resin, and having improved steering stability and ride comfort.

SUMMARY OF THE INVE NTION

An object of the present invention is to provide a tire having improved ride comfort.
As a result of intensive studies, it has been found that the above-described problem can be solved by setting an aromatic vinyl unit content in a rubber component constituting a sidewall and a thickness of a surface rubber layer at a tire maximum width position in a predetermined relationship.
That is, the present invention relates to:

a tire comprising a sidewall,
wherein the sidewall is composed of a rubber composition comprising a rubber component, and
wherein, when an aromatic vinyl unit content in the rubber component is defined as S (% by mass), and a thickness of a surface rubber layer at a tire maximum width position is defined as T (mm), S is 0.50% by mass or more and 5.0% by mass or less, and S/T is 0.045 or more and 3.33 or less.

According to the present invention, provided is a tire having improved ride comfort.

BRIEF DESCRIPTION OF THE DRAWINGS

FIG. 1 is a schematic partial cross-sectional view of a tire according to one embodiment of the present invention.

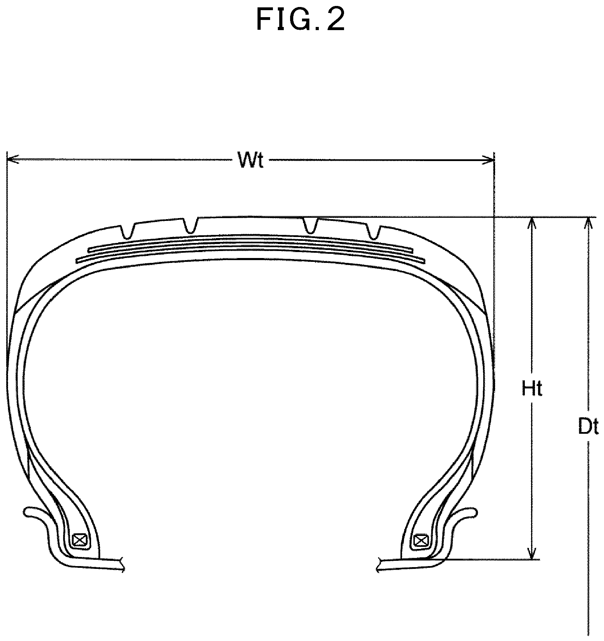

FIG. 2 is a view showing a tire cross-sectional width Wt, a tire cross-sectional height Ht, and a tire outer diameter Dt on a cross section of the tire.

DETAILED DESCRIPTION

The tire that is one embodiment of the present invention is a tire comprising a sidewall, wherein the sidewall is composed of a rubber composition comprising a rubber component, and wherein, when an aromatic vinyl unit content in the rubber component is defined as S (% by mass) and a thickness of a surface rubber layer at a tire maximum width position is defined as T(mm), S is 0.50% by mass or more and 5.0% by mass or less, and S/T is 0.045 or more and 3.33 or less.
The tire obtained is remarkably improved in ride comfort by making the aromatic vinyl unit content in the rubber composition constituting the sidewall and the thickness of the surface rubber layer at the tire maximum width position to satisfy the above-described requirements. The reason for that is considered as follows, although the following consideration is not intended to be bound by any theory.
A tire undergoes input from a road surface during rolling motion of the tire, and vibration travels from a tread surface, via a sidewall surface, to a vehicle. Here, it is considered that vibration of the vehicle depends on easiness of energy conversion of the vibration into heat by a sidewall rubber. The tire of the present invention has the following features: (1) the aromatic vinyl unit content in the rubber component constituting the sidewall is set to be in a predetermined range, thereby forming a domain in which aromatic vinyl units aggregate with one another in the rubber composition, so that impact is converted into heat energy in that domain part, which allows for the impact to be easily mitigated, and (2) it is considered that absorption of impact by a sidewall part is also affected by its deflection amount, and deformation is less likely to occur in the case where the thickness is thick, so that the aromatic vinyl unit content is increased as the thickness of the surface rubber layer constituting the sidewall becomes thick, thereby making it easy for the sidewall rubber to convert vibration into heat in a frequency range of input from the road surface, which allows for the impact to be easily mitigated. Additionally, with cooperation of these features, it becomes easy to absorb the impact in the domain part of the aromatic vinyl units in accordance with deformation in the sidewall part, easiness of energy conversion of vibration into heat is improved, and it is considered that a notable effect of remarkably improving ride comfort is achieved.

The rubber component preferably comprises a multi-component polymer having aromatic vinyl units, non-conjugated olefin units, and conjugated diene units.

Since the multi-component polymer has high heat resistance and ozone resistance, it is considered that the above-described effects can be maintained for a long time even at the time of deterioration of the tire.

The rubber component preferably comprises an isoprene-based rubber and/or a butadiene rubber. A content of the isoprene-based rubber in the rubber component is preferably 15% by mass or more and 65% by mass or less, and a content of the butadiene rubber in the rubber component is preferably 20% by mass or more and 60% by mass or less.

When these rubber components whose glass transition temperatures (Tg) are low are compounded, the flexibility of the sidewall rubber is improved in an even wider temperature range, and it is considered that the input from the road surface can be mitigated.

The rubber composition preferably comprises 35 parts by mass or more and 70 parts by mass or less of a filler comprising carbon black and/or silica based on 100 parts by mass of the rubber component. Moreover, a content of the silica in 100% by mass of the filler is preferably 5% by mass or more and 30% by mass or less.

When the filler is compounded in a predetermined amount, energy loss due to friction between the filer and the aromatic vinyl domain is made to occur inside the rubber, and it is considered that the impact can be made easily absorbed. Moreover, when a predetermined amount of silica is compounded in the filler, the flexibility of the sidewall rubber in an infinitesimal deformation area is improved, and it is considered that the input from the road surface can be mitigated.

When a tire weight is defined as G (kg) and a maximum load capacity of the tire is defined as $W_L$ (kg), $G/W_L$ is preferably 0.0210 or less.

When $G/W_L$ is within the above-described range to reduce the tire weight relative to the maximum load capacity of the tire, influence due to the tire weight becomes small even with a load due to loading or riding being applied to the tire, impact on the whole tire can be reduced, and deformation of the sidewall can be reduced, so that it is considered that the input from the road surface can be mitigated.

The tire cross-sectional width Wt (mm) and the tire outer diameter Dt (mm) preferably satisfy the following inequality (1).

$$(\pi/4) \times (Dt^2/Wt) \geq 1600 \cdots (1)$$

When the tire cross-sectional width and the tire outer diameter are within the above-described range, the outer diameter is increased by a certain amount or more with respect to the tire width, and it is considered that the tire can be easily deformed at a side part.

<Definition>

An "aromatic vinyl unit content in the rubber component" refers to a total content (% by mass) of aromatic vinyl units such as a styrene part included in 100% by mass of the rubber component and is a value obtained by calculating a value obtained by multiplying the aromatic vinyl unit content (% by mass) by a mass fraction in the rubber component for each rubber component and summing up these values. Specifically, the aromatic vinyl unit content in the rubber component is calculated by $\Sigma$ (aromatic vinyl unit content (% by mass) of each rubber comprising aromatic vinyl units × content (% by mass), in rubber component, of each rubber component comprising aromatic vinyl units / 100).

A "standardized rim" is a rim defined for each tire in a standard system including a standard, on which the tire is based, by the standard, for example, a "standard rim" in JATMA, "Design Rim" in TRA, or "Measuring Rim" in ETRTO. Besides, in a case of a tire whose size is not defined in the above-described standard system, the "standardized rim" is regarded as a rim that can be rim-assembled to such a tire and that has the narrowest width among rims having a minimum diameter and not causing air leakage between the rims and the tire.

A "standardized internal pressure" is an air pressure defined for each tire in a standard system including a standard, on which the tire is based, by the standard, for example, a "MAXIMUM AIR PRESSURE" in JATMA, a maximum value described in the table "TIRE LOAD LIMITS AT VARIOUS COLD INFLATION PRESSURES" in TRA, or "INFLATION PRESSURE" in ETRTO. Besides, in a case of a tire whose size is not defined in the above-described standard system, the standardized internal pressure is regarded as being 250 kPa.

A "standardized state" is a state in which the tire is rim-assembled to a standardized rim, filled with a standardized internal pressure, and applied with no load. Besides, in a case of a tire whose size is not defined in the above-described standard system, the standardized state is regarded as a state in which the tire is rim-assembled to the rim having the minimum diameter, filled with a pressure of 250 kPa, and applied with no load.

A "thickness T of a surface rubber layer at a tire maximum width position" is a distance (mm) from a sidewall surface to a carcass cord surface, the distance being measured along a normal L of a tire maximum width position PW in a sidewall 31. The "tire maximum width position PW" refers to a position of a maximum width in a cross section in a tire width direction that is measured in the standardized state. The "surface rubber layer" is defined as a layer comprising the sidewall rubber.

A "tire weight" is defined as G (kg). It is noted that G is a weight of a single tire excluding a weight of a rim. Moreover, in a case where a noise suppressing material, a sealant, and a sensor are attached to a tire inner cavity part, G is a value including weights of these elements.

A "maximum load capacity ($W_L$) (kg)" is a value calculated by the following equations (2) and (3) when the tire cross-sectional width measured in the standardized state is defined as Wt (mm), the tire cross-sectional height is defined as Ht (mm), and the tire outer diameter is defined as Dt (mm). V denotes a virtual volume of a space occupied by the tire. In a case where there are patterns, letters, or the like on a tire lateral side, the tire cross-sectional width Wt is a maximum width between sidewall outer surfaces as one from which the patterns, letters, or the like are excluded in the above-described state. The tire cross-sectional height Ht is a distance from a bottom surface of a bead part to an outermost surface of a tread and is one-half of a difference between the outer diameter of the tire and a nominal size of a rim diameter.

$$V = \{(Dt/2)^2 - (Dt/2 - Ht)^2\} \times \pi \times Wt \quad \cdots \quad (2)$$

$$W_L = 0.000011 \times V + 100 \quad \cdots \quad (3)$$

A "tire cross-sectional width Wt (mm)" is a maximum width between the sidewall outer surfaces, in a case where there are patterns, letters, or the like on a tire lateral side, as one from which the patterns, letters, or the like are excluded in the standardized state. A "tire outer distance Dt (mm)" is a tire outer diameter measured in the standardized state.

A "recycled carbon black" refers to carbon black obtained from a pyrolysis process for a product such as a used tire comprising carbon black, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, mass (carbon amount) of a weight loss content due to the oxidative combustion is less than 87% by mass. The recycled carbon black is also referred to as a "recycled carbon" and may be expressed by rCB.

A "content of oil" also comprises an amount of oil contained in an oil-extended rubber.

<Measuring method>

An "aromatic vinyl unit content" is a value calculated by $^1$H-NMR measurement and is applied to a rubber component having a repeating unit derived from an aromatic vinyl compound such as, for example, a SBR and a multi-component polymer. A "vinyl content (1,2-bond butadiene unit amount)" is a value calculated by an infrared absorption spectrometry in accordance with JIS K 6239-2:2017 and is applied to a rubber component having a repeating unit derived from butadiene such as, for example, a SBR and a BR. A "cis content (cis-1,4-bond butadiene unit amount)" is a value calculated by an infrared absorption spectrometry in accordance with JIS K 6239-2:2017 and is applied to a rubber component having a repeating unit derived from butadiene such as, for example, a BR.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). For example, the Mw is applied to, for example, a SBR, a BR, a resin component, a liquid rubber, or the like.

A glass transition temperature (Tg) of the multi-component polymer is measured by measuring a temperature in accordance with JIS K 7121 using a differential calorimeter (Q200) manufactured by TA Instruments Japan Inc. while increasing the temperature at a temperature rising rate of 10°C/min.

An "average primary particle size of carbon black" can be calculated by observing carbon black with a transmission or scanning electron microscope, measuring 400 or more primary particles of carbon black observed in the field of view, and averaging them. A "$N_2SA$ of carbon black" is measured in accordance with JIS K 6217-2:2017. An "average primary particle size of silica" can be calculated by observing silica with a transmission or scanning electron microscope, measuring 400 or more primary particles of silica observed in the field of view, and averaging them. A "$N_2SA$ of silica"

is measured by a BET method according to ASTM D3037-93.

A procedure for producing a tire that is one embodiment of the present invention is described below in detail. However, the following descriptions are illustrative for explaining the present invention and are not intended to limit the technical scope of the present invention to this description range only. Besides, in the present specification, a numerical range identified with "to" means to include the numerical values of both ends.

<Tire>

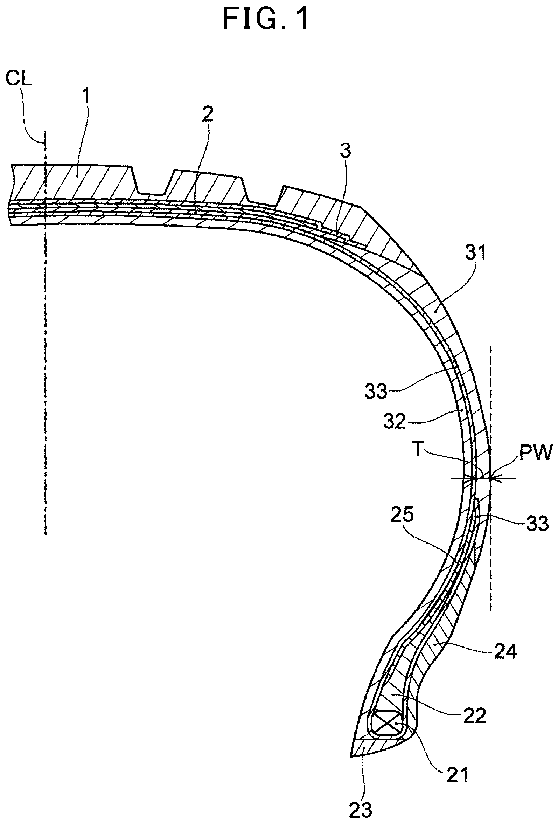

Although a tire that is one embodiment of the present invention is illustrated in FIG. 1, the present invention is not limited to this embodiment. FIG. 1 illustrates a part of a cross section perpendicular to a circumferential direction of this tire. In FIG, 1, a vertical direction is a tire radial direction, a horizontal direction is a tire axial direction, and a direction perpendicular to a paper surface is a tire circumferential direction.

The tire according to the present embodiment comprises a tread 1 extending in the circumferential direction to form an annular shape, a pair of sidewalls 31 arranged on both sides of the tread part, a pair of bead parts each having a bead core 21, at least one carcass 33 layer moored to the bead core 21, and at least one belt layer 2 arranged on the outer side of the carcass 33 in the tire radial direction.

The bead parts of the tire of the present embodiment are located on the inner sides of the sidewalls 31 in the tire axial direction. The bead parts each have the bead core 21 and a bead apex 22 extending from this core outward in the tire radial direction. The bead apex 22 tapers off outward in the tire radial direction.

In FIG. 1, the carcass 33 is folded back around the bead core 21 from the inner side toward the outer side in the tire axial direction. By folding the carcass back, a main part and a folding-back part are formed in the carcass 33. A strip apex 25 generally extends in the tire radial direction. The strip apex 25 is laminated with the beat apex 22 in the vicinity of an inner-side end of the strip apex in the tire radial direction. The strip apex 25 is sandwiched between the main part and the folding-back part of the carcass 33 in the vicinity of the inner-side end of the strip apex in the tire radial direction.

In the tire according to the present embodiment, when the tire cross-sectional width is defined as Wt (mm) and the tire outer diameter is defined as Dt (mm), Wt and Dt preferably satisfy the following inequality (1).

$$(\pi/4) \times (Dt^2/Wt) \geq 1600 \ \cdots \ (1)$$

Here, there is a relationship in which a value in the inequality (1) increases as Dt increases, and conversely, it decreases as Dt decreases, whereas it decreases as Wt increases, and conversely, it increases as Wt decreases. Accordingly, paying attention to this point, adjustment can be made so that Dt and Wt satisfy the inequality (1), by adjusting Dt and Wt.

The value in the inequality (1) is preferably 1620 or more, more preferably 1640 or more, further preferably 1660 or more. Moreover, the value in the inequality (1) is preferably 2800 or less, more preferably 2600 or less, further preferably 2400 or less, particularly preferably 2200 or less.

Specific examples of a tire size satisfying the inequality (1) include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, 195/65R16, 205/55R17, 215/45R18, and the like.

In the tire according to the present embodiment, $G/W_L$ is preferably 0.0210 or less, more preferably 0.0205 or less, further preferably 0.0200 or less, further preferably 0.0195 or less, further preferably 0.0180 or less, further preferably 0.0165 or less, particularly preferably 0.0150 or less, from the viewpoint of the effects of the present invention. On the other hand, a lower limit value of $G/W_L$ is not particularly limited and can be set to, for example, 0.0090 or more, 0,0100 or more, 0.0110 or more, or 0.0120 or more. Besides, the tire weight G can be changed by a usual method, that is, the tire weight G can be increased by increasing the specific gravity of the tire or by increasing a thickness of each member of the tire and can also be decreased in a reverse manner.

The maximum load capacity $W_L$ (kg) is preferably 300 or more, more preferably 400 or more, further preferably 450 or more, particularly preferably 500 or more, from the viewpoint of better exhibiting the effects of the present invention. Moreover, the maximum load capacity $W_L$ (kg) can be set to, for example, 1300 or less, 1200 or less, 1100 or less, 1000 or less, 900 or less, 800 or less, 700 or less, or 650 or less from viewpoint of better exhibiting the effects of the present invention. Besides, the maximum load capacity $W_L$ can be increased by increasing the virtual volume of the space occupied by the tire and can also be decreased in a reverse manner.

The thickness T (mm) of the surface rubber layer at the tire maximum width position is preferably 0.5 mm or more, more preferably 0.8 mm or more, further preferably 1.0 mm or more, from the viewpoint of the effects of the present invention. Moreover, T (mm) is preferably 12.0 mm or less, more preferably 10.0 mm or less, further preferably 8.0 mm or less, further preferably 6.0 mm or less, particularly preferably 4.0 mm or less, from the viewpoint of the effects of the present invention.

When an aromatic vinyl unit content in the rubber component is defined as S (% by mass), S/T is 0.045 or more, preferably 0.065 or more, more preferably 0.10 or more, further preferably 0.15 or more, further preferably 0.20 or more, particularly preferably 0.25 or more. Moreover, S/T is 3.33 or less, preferably 3.00 or less, more preferably 2.80 or less, further preferably 2.60 or less, particularly preferably 2.40 or less. When S/T is within the above-described ranges, there is a tendency to make it easy to mitigate stress in a styrene domain part even in a state where rigidity due to the thickness of the bead part is high.

[Rubber composition]

The tire according to the present embodiment can be improved in ride comfort more effectively by cooperation of the aromatic vinyl unit content in the rubber component constituting the above-described sidewall with the thickness of the sidewall at the tire maximum width position.

<Rubber component>

The rubber composition constituting the sidewall according to the present embodiment (which is, hereinafter, referred to as "rubber composition according to the present embodiment", unless otherwise noted) preferably comprises a diene-based rubber and a multi-component polymer as rubber components, and the rubber component may be prepared as a rubber component consisting of a diene-based rubber and a multi-component polymer. The multi-component polymer has high heat resistance and ozone resistance. Therefore, when the multi-component polymer is compounded, the effects of the present invention can be maintained for a long time even when the tire deteriorates.

(Multi-component polymer)

The "multi-component polymer" is a copolymer having aromatic vinyl units, non-conjugated olefin units, and conjugated diene units, may also have other monomer units, and is preferably a copolymer consisting of aromatic vinyl units, non-conjugated olefin units, and conjugated diene units. This copolymer can be obtained by copolymerizing monomer components comprising aromatic vinyl units, non-conjugated olefin units, and conjugated diene units and hydrogenating them if desired. Alternatively, this copolymer can also be obtained by copolymerizing monomer components comprising aromatic vinyl units and conjugated diene units, preferably monomer components consisting of aromatic vinyl units and conjugated diene units, to obtain a copolymer and then hydrogenating the conjugated diene units of this obtained copolymer to generate non-conjugated olefin units. As long as the multi-component polymer is a copolymer having aromatic vinyl units, non-conjugated olefin units, and conjugated diene units, arrangement of each unit is not particularly limited, and the copolymer may be a random copolymer obtained by random copolymerization or a block copolymer obtained by block copolymerization and is preferably a random copolymer. The multi-component polymer can be used alone, or two or more thereof can be used in combination.

<<Aromatic vinyl unit>>

The "aromatic vinyl unit" refers to a unit derived from an aromatic vinyl compound in a copolymer. Here, the "aromatic vinyl compound" refers to an aromatic compound substituted with at least a vinyl group, and refers to a compound that does not comprise a conjugated diene compound which will be described below. Examples of the aromatic vinyl compound include, for example, styrene, $\alpha$-methylstyrene, 1-vinylnaphthalene, 3-vinyltoluene, ethyl vinyl benzene, divinyl benzene, 4- cyclohexyl styrene, 2,4,6-trimethylstyrene, and the like, and styrene is preferable. They may be used alone, or two or more thereof may be used in combination, but among them, styrene is particularly preferable from the viewpoint of a practical aspect such as ease of obtaining monomers and for the reason that the effects of the present invention can be obtained more appropriately.

«Non-conjugated olefin unit»

The "non-conjugated olefin unit" refers to a unit derived from a non-conjugated olefin compound in a copolymer. Here, the "non-conjugated olefin compound" refers to a non-conjugated compound that is an unsaturated aliphatic hydrocarbon and that has one or more carbon-carbon double bonds. Examples of the non-conjugated olefin compound include, for example, $\alpha$-olefin such as ethylene, propylene, 1-butene, 1-pentene, 1-hexene, 1-heptene, or 1-octene; a heteroatom-substituted alkene compound such as pivalic acid vinyl, 1-phenylthio ethene, or N-vinyl pyrrolidone; and the like. Among them, ethylene, 1-butene, and the like are preferable. They may be used alone, or two or more thereof may be used in combination, but among them, ethylene and/or 1-butene are more preferable from the viewpoint of a practical aspect such as ease of obtaining monomers and for the reason that the effects of the present invention can be obtained more appropriately.

<<Conjugated diene unit>>

The "conjugated diene unit" refers to a unit derived from a conjugated diene compound in a copolymer. Here, examples of the conjugated diene compound include, for example, 1,3-butadiene, isoprene, 1,3-pentadiene, 2,3-dimetylbutadiene, 2-phenyl-1,3-butadiene, 1-3-hexadiene, and the like. They may be used alone, or two or more thereof may be used in combination, but among them, 1,3-butadiene and isoprene are preferable, and 1,3-butadiene is more preferable, from the viewpoint of a practical aspect such as ease of obtaining monomers and for the reason that the effects of the present invention can be obtained more appropriately.

<<Multi-component polymer>>

Preferred specific examples of the multi-component polymer include, for example, one obtained by hydrogenating a copolymer of styrene and 1,3-butadiene (styrene-butadiene copolymer (SBR)), one obtained by copolymerizing styrene, 1,3-butadiene, and ethylene. Accordingly, a hydrogenated styrene-butadiene copolymer (hydrogenated SBR) is preferable as a multi-component polymer.

<< Hydrogenation rate>>

In a case where the multi-component polymer is obtained with hydrogenation, a hydrogenation rate in that case is preferably 30 mol% or more, more preferably 50 mol% or more, further preferably 70 mol% or more, particularly preferably 90 mol% or more, from the viewpoints of the effect of the present invention. An upper limit of the hydrogenation rate of the multi-component polymer is not particularly limited and may be less than 100 mol%. The hydrogenation rate can be adjusted by adjusting a reaction condition such as hydrogen gas-supplying pressure and reaction temperature in a hydrogenation reaction as described below in Production example 2. Bedsides, the hydrogenation rate of the multi-component polymer refers to a ratio of hydrogenated double bonds on its conjugated diene units in a case where the multi-component polymer is one obtained by hydrogenating a polymer consisting of aromatic vinyl units and conjugated diene units, and the hydrogenation rate can be calculated from a spectral reduction rate of an unsaturated bond part among spectra obtained by measuring $^1$H-NMR.

«Modification»

As the multi-component polymer, a modified one treated with a modifying agent and into which a functional group having an interaction with silica is introduced can also be used, if desired. As such a functional group, any of those commonly used in this field can be appropriately used, examples of which include, for example, alkoxysilyl groups (for example, a trimethoxysilyl group, a triethoxysilyl group) and the like. For example, when the above-described copolymer is treated using chlorotriethoxysilane as a modifying agent before performing a hydrogenation process after synthesis of the above-described copolymer, a modified one into which a triethoxysilyl group is introduced at an active terminal of the copolymer can be obtained.

<<MW>>

A weight-average molecular weight (Mw) of the multi-component polymer is preferably 50,000 or more, more preferably 100,000 or more, further preferably 150,000 or more, from the viewpoint of the effects of the present invention. Moreover, the Mw of the multi-component polymer is preferably 2,000,000 or less, more preferably 1,000,000 or less, further preferably 700,000 or less, from the viewpoint of processability.

<<Tg>>

A glass transition temperature (Tg) of the multi-component polymer is preferably -90°C or more, more preferably -80°C or more, further preferably - 70°C or more, particularly preferably -60°C or more, from the viewpoint of abrasion resistance. Moreover, the Tg of the multi-component polymer is preferably less than -10°C, more preferably less than -15°C, further preferably less than -20°C, particularly preferably less than -25°C.

<<Aromatic vinyl unit content of multi-component polymer>>

Although the aromatic vinyl unit content of the multi-component polymer can be appropriately selected such that a content of the aromatic vinyl units in the rubber component satisfies a range which will be described below, it is preferably 1.0% by mass or more, more preferably 3.0% by mass or more, further preferably 5.0% by mass or more, particularly preferably 7.0% by mass or more. Moreover, the aromatic vinyl unit content of the multi-component polymer is preferably 40% by mass or less, more preferably 38% by mass or less, further preferably 36% by mass or less. The aromatic vinyl unit content is preferably a styrene content. Besides, the aromatic vinyl unit content of the multi-component polymer is measured by the above-described measuring method.

«Content of multi-component polymer»

Although a content of the multi-component polymer in the rubber component can be appropriately selected such that the content of the aromatic vinyl units in the rubber component satisfies a range which will be described below, it is preferably 3% by mass or more, more preferably 5% by mass or more, further preferably 7% by mass or more, particularly preferably 9% by mass or more. On the other hand, the content of the multi-component polymer in the rubber component is preferably 45% by mass or less, more preferably 42% by mass or less, further preferably 38% by mass or less, further preferably 35% by mass or less, further preferably 30% by mass or less, further preferably 25% by mass or less, further preferably 20% by mass or less, particularly preferably 18% by mass.

<<Verification of multi-component polymer>>

Besides, verification that the multi-component polymer comprises the conjugated diene units, the non-conjugated olefin units, and the aromatic vinyl units can be performed using a technique such as a gel permeation chromatography (GPC), $^1$H-NMR, or $^{13}$C-NMR. Specifically, UV absorption with an aromatic ring such as a benzene ring in a copolymer is verified based on a gel permeation chromatography-refractive index curve (GPC-RI curve) and a gel permeation chromatography-ultraviolet absorption curve (GPC-UV curve), so that existence of a framework derived from an aromatic vinyl compound can be verified. Moreover, existence of units derived from each monomer component can be verified based on a $^1$H-NMR spectrum or a $^{13}$C-NMR spectrum.

«Method of producing multi-component polymer»

The above-described multi-component polymer can be synthesized, for example, by performing, if desired, a hydrogenation process on a copolymer obtained by copolymerizing monomer components comprising aromatic vinyl units, non-conjugated olefin units, and conjugated diene units. Alternatively, the above-described multi-component polymer can also be synthesized by copolymerizing monomer components comprising aromatic vinyl units and conjugated diene units to obtain a copolymer and then hydrogenating the conjugated diene units of this obtained copolymer to generate non-conjugated olefin units. Such synthesis can be implemented by a usual method and is described in, for example, JP 2018-83884 A, WO 2018/092733, etc. The same applies to the modified one of the multi-component polymer.

(Diene-based rubber)

As a diene-based rubber, any rubber components can be appropriately used which are rubber components other than the above-described multi-component polymers and which are commonly used in the tire industry. Specifically, examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. The diene-based rubber preferably includes at least one selected from a group consisting of an isoprene-based rubber, a BR, and a SBR, more preferably includes an isoprene-based rubber, and further preferably includes an isoprene-based rubber and a BR. Moreover, the diene-based rubber may be prepared as a diene-based rubber consisting of an isoprene-based rubber and a BR.

A content of the diene-based rubber in the rubber component is preferably 65% by mass or more, more preferably 70% by mass or more, further preferably 75% by mass or more, further preferably 80% by mass or more, particularly preferably 82% by mass or more, from the viewpoint of the effects of the present invention. Moreover, an upper limit of the content of the diene-based rubber in the rubber component is not particularly limited and can be set to, for example, 100% by mass, 97% by mass or less, 95% by mass or less, 93% by mass or less, or 91% by mass or less.

(Isoprene-based rubber)

Examples of the isoprene-based rubber include, for example, a natural rubber (NR), an isoprene rubber (IR), a reformed NR, a modified NR, a modified IR, and the like. As the NR, for example, those common in the tire industry can be used, such as SIR20, RSS#3, and TSR20. Examples of the reformed NR include, for example, a deproteinized natural rubber (DPNR), an ultra pure natural rubber, and the like. Examples of the modified NR include, for example, an epoxidized natural rubber (ENR), a hydrogenated natural rubber (HNR), a grafted natural rubber, and the like. Examples of the modified IR include, for example, an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber in the rubber component is preferably 10% by mass or more, more preferably 15% by mass or more, further preferably 20% by mass or more, further preferably 25% by mass or more, particularly preferably 30% by mass or more. On the other hand, the content of the isoprene-based rubber in the rubber component is preferably 80% by mass or less, more preferably 75% by mass or less, further preferably 70% by mass or less, further preferably 65% by mass or less, further preferably 60% by mass or less, further preferably 55% by mass or less, particularly preferably 50% by mass or less. It is considered that, when the content of the isoprene-based rubber is within the above-described ranges, flexibility of the sidewall rubber is improved in a wide temperature range and an input from a road surface can be mitigated.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable from the viewpoint that fuel efficiency and abrasion resistance can be well improved. These SBRs may be used alone, or two or more thereof may be used in combination.

An oil-extended SBR or a non-oil extended SBR can be used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

Although a styrene content of the SBR can be appropriately selected such that the aromatic vinyl unit content in the rubber component satisfies ranges which will be described below, it is preferably 1.0% by mass or more, more preferably 3.0% by mass or more, further preferably 5.0% by mass or more, particularly preferably 7.0% by mass or more. Moreover, the styrene content of the SBR is preferably 25% by mass or less, more preferably 20% by mass or less, further preferably 18% by mass or less. Besides, the styrene content of the SBR is measured by the above-described method of measuring an aromatic vinyl unit content.

A vinyl content of the SBR is preferably 10 mol% or more, more preferably 15 mol% or more, further preferably 20 mol% or more, from the viewpoints of ensuring reactivity with silica, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, the vinyl content of the SBR is measured by the above-described measuring method.

A weight-average molecular weight (Mw) of the SBR is preferably 100,000 or more, more preferably 140,000 or more, further preferably 180,000 or more, from the viewpoint of the effects of the present invention. Moreover, the weight-average molecular weight is preferably 2,000,000 or less, more preferably 1,800,000 or less, further preferably 1,500,000 or less, from the viewpoint of cross-linking uniformity. Besides, the Mw of the SBR is measured by the above-described measuring method.

A glass transition temperature (Tg) of the SBR is preferably -90°C or more, more preferably -80°C or more, further preferably -70°C or more, from the viewpoint of abrasion resistance. Moreover, the Tg of the SBR is preferably less than -10°C, more preferably less than -20°C, further preferably less than -30°C, particularly less than -40°C.

Although a content of the SBR in the rubber component can be appropriately selected such that the aromatic vinyl unit content in the rubber component can satisfy ranges which will be described below, it can be set to, for example, 1% by mass or more, 3% by mass or more, 5% by mass or more, or 10% by mass or more. On the other hand, the content of the SBR in the rubber component is preferably 45% by mass or less, more preferably 42% by mass or less, further preferably 38% by mass or less, particularly preferably 35% by mass or less.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As rare-earth-based BRs, those commonly used in the tire industry can be used. As rare-earth element-based catalysts used for synthesis (polymerization) of rare-earth-based BRs, known ones can be used, examples of which include, for example, lanthanide series rare-earth element compounds, organoaluminium compounds, aluminoxanes, halogen-containing compounds, and, catalysts including a Lewis base as necessary. Among them, a neodymium (Nd)-based catalyst using a Nd-containing compound as a lanthanide series rare-earth element compound is preferable from the viewpoint that a BR having a high cis content and a low vinyl content can be obtained.

Examples of the SPB-containing BR include those in which 1,2-syndiotactic polybutadiene crystal is chemically bonded with BR and dispersed, but not those in which the crystal is simply dispersed in the BR.

Examples of the modified BR include those obtained by adding a tin compound after polymerizing 1,3-butadiene by a lithium initiator, the end of which is further bonded by tin-carbon bond (a tin-modified BR), a butadiene rubber (a modified BR for silica) having a condensed alkoxysilane compound at its active terminal, and the like.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw of the BR is measured by the above-described measuring method.

A content of the BR in the rubber component is preferably 5% by mass or more, more preferably 10% by mass or more, further preferably 15% by mass or more, further preferably 20% by mass or more, particularly preferably 25% by mass or more,. On the other hand, the content of the BR in the rubber component is preferably 70% by mass or less, more preferably 65% by mass or less, further preferably 60% by mass or less, further preferably 55% by mass or less, particularly preferably 51% by mass or less. It is considered that, when the content of the BR is within the above-described ranges, flexibility of the sidewall rubber is improved in a wide temperature range and an input from a road surface can be mitigated.

(Other rubber components)

The rubber component can also include rubber components other than the above-described rubber components to such an extent as not to compromise the effects of the present invention, and examples of such a rubber component include, for example, non-diene-based rubbers such as a hydrogenated nitrile rubber (HNBR), a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber. Moreover, the rubber component may comprise a known thermoplastic elastomer in addition to the above-described rubber components or may not comprise such a thermoplastic elastomer.

The aromatic vinyl unit content S in the rubber component is 0.50% by mass or more, preferably 0.60% by mass or more, more preferably 0.90% by mass or more, further preferably 1.2% by mass or more, particularly preferably 1.5% by mass or more, from the viewpoint of the effects of the present invention. Moreover, the aromatic vinyl unit content S in the rubber component is 5.0% by mass or less, preferably 4.9% by mass or less, more preferably 4.5% by mass or less, further preferably 4.0% by mass or less, particularly preferably 3.5% by mass or less, from the viewpoint of the effects of the present invention.

A value of the aromatic vinyl unit content in the rubber component corresponds to the weighted average of the aromatic vinyl contents of the respective rubber components contained in the rubber component. Therefore, for example, by using many rubber components whose aromatic vinyl unit contents have a large value, the value of the aromatic vinyl unit content in the rubber component can be increased. Conversely, by using many rubber components whose aromatic vinyl unit contents have a small value, the value of the aromatic vinyl unit content in the rubber component can be decreased.

<Filler>

The rubber composition according to the present embodiment preferably comprises carbon black and/or silica as a filler, more preferably comprises carbon black, and further preferably comprises carbon black and silica. Moreover, a filler may be prepared as a filler consisting of carbon black and silica.

(Silica)

Silica is not particularly limited, and those common in the tire industry can be used, such as, for example, silica prepared by a dry process (anhydrous silica) and silica prepared by a wet process (hydrous silica). Moreover, silica made from a biomass material (for example, an amorphous silica purified from rice husks) may be used from the viewpoint of environmental load. Among them, hydrous silica prepared by a wet process is preferable for the reason that it has many silanol groups. These silica may be used alone, or two or more thereof may be used in combination.

The silica made from a biomass material can be obtained by, for example, extracting silicate from rice husk ashes obtained by burning rice husks, using a sodium hydroxide solution, and in the same manner as for conventional wet silica, filtering, washing with water, drying, and pulverizing precipitates of silicon dioxide generated by reacting with sulfuric acid, using the silicate.

When silica crystallizes, it is insoluble in water and silicic acid that is a component thereof cannot be used. By controlling a burning temperature and a burning time, crystallization of silica in rice husk ashes can be suppressed (see JP 2009-002594 A, Akita Prefectural University Web Journal B/2019, vol.6, p.216-222, etc.).

As the amorphous silica extracted from rice husks, those commercially available from Wilmar International Ltd., etc. can be used.

An average primary particle size of silica is preferably 10 nm or more, more preferably 12 nm or more, further preferably 14 nm or more. When the average primary particle size of silica is within the above-described ranges, rubber molecules bound by silica are minimized, and it becomes easy for polymer molecule chains to flexibly move. Accordingly, it is considered that, for an input, stress can be mitigated even by the polymer molecule chains. On the other hand, the average primary particle size is preferably 22 nm or less, more preferably 20 nm or less, further preferably 18 nm or less, from the viewpoint of making it easy to mitigate impact by interaction with a domain of the aromatic vinyl units. Besides, the average primary particle size of silica is measured by the above-described measuring method.

A nitrogen adsorption specific surface area ($N_2SA$) of silica is preferably 110 $m^2$/g or more, more preferably 140 $m^2$/g or more, further preferably 170 $m^2$/g or more, particularly preferably 180 $m^2$/g or more, from the viewpoint of the effects of the present invention. Moreover, the $N_2SA$ is preferably 350 $m^2$/g or less, more preferably 300 $m^2$/g or less, further preferably 250 $m^2$/g or less. Besides, the $N_2SA$ of silica is measured by the above-described measuring method.

A content of silica based on 100 parts by mass of the rubber component is preferably 1 part by mass or more, more preferably 3 parts by mass or more, further preferably 5 parts by mass or more, particularly preferably 7 parts by mass or more, from the viewpoint of obtaining reinforcing property. Moreover, it is preferably 30 parts by mass or less, more preferably 25 parts by mass or less, further preferably 20 parts by mass or less, particularly preferably 15 parts by mass or less, from the viewpoint of obtaining flexibility of the rubber to mitigate an input from a road surface.

(Carbon black)

Carbon black is not particularly limited, and those common in the tire industry can be used, such as, for example, GPF, FEF, HAF, ISAF, and SAF. Moreover, a recycled carbon black (rCB) obtained from pyrolysis of a used tire may be used from the viewpoint of environmental load. These carbon black may be used alone, or two or more thereof may be used in combination.

A waste tire is used as a raw material of the recycled carbon black, and the recycled carbon black comprises carbon with varying particle sizes, so that, for a wide range of input frequencies from the road surface, the recycled carbon black can convert vibration energy into heat energy, and it is considered that ride comfort is improved.

The recycled carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that the recycled carbon black can be obtained by pyrolysis of an organic material at 550 to 580°C under an environment in which oxygen is eliminated or by vacuum pyrolysis at a relatively low temperature ([0027]). As described in [0004] of JP 6856781 B, such carbon black obtained by the pyrolysis processes usually lacks a functional group on its surface (A comparison of surface morphology and chemistry of pyrolytic carbon blacks with commercial carbon blacks, Powder Technology 160 (2005) 190-193).

The recycled carbon black may be one that lacks a functional group on its surface or may be one treated so as to include a functional group on its surface. A process for treating recycled carbon black so that the recycled carbon black includes a functional group on its surface can be implemented by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of recycled carbon black according to the present embodiment also include carbon black treated so as to include a functional group on its surface.

Those commercially available from Strebl Green Carbon Pte Ltd., LDC Co., Ltd., etc. can be used as the recycled carbon black.

An average primary particle size of carbon black is preferably 40 nm or more, more preferably 45 nm or more, further preferably 50 nm or more, particularly preferably 55 nm or more. When the average primary particle size of carbon black is within the above-described ranges, rubber molecules bound by carbon black are minimized, and it becomes easy for polymer molecule chains to flexibly move. Accordingly, it is considered that, for an input, stress can be mitigated even by the polymer molecule chains. On the other hand, the average primary particle size is preferably 120 nm or less, more preferably 110 nm or less, further preferably 100 nm or less, particularly preferably 90 nm or less, from the viewpoint of making it easy to mitigate impact by interaction with a domain of the aromatic vinyl units. Besides, the average primary particle size of carbon black is measured by the above-described measuring method.

A nitrogen adsorption specific surface area ($N_2SA$) of carbon black is preferably 50 $m^2$/g or less, more preferably 45 $m^2$/g or less, further preferably 42 $m^2$/g or less, from the viewpoint of the effects of the present invention. Moreover, the $N_2SA$ is preferably 20 $m^2$/g or more, more preferably 25 $m^2$/g or more, further preferably 30 $m^2$/g or more. Besides, the $N_2SA$ of carbon black is measured by the above-described measuring method.

A content of carbon black when compounded based on 100 parts by mass of the rubber component is preferably 25 parts by mass or more, more preferably 30 parts by mass or more, further preferably 35 parts by mass or more, particularly preferably 40 parts by mass or more, from the viewpoints of obtaining reinforcing property and preventing deterioration due to ultraviolet rays. Moreover, it is preferably 90 parts by mass or less, more preferably 80 parts by mass or less, further preferably 70 parts by mass or less, further preferably 65 parts by mass or less, particularly preferably 60 parts by mass or less, from the viewpoint of obtaining flexibility of the rubber to mitigate an input from a road surface.

A content of the recycled carbon black in a total content of carbon black can be set to be, but not particularly limited to, for example, more than 1% by mass, more than 5% by mass, more than 10% by mass, more than 20 parts by mass, more than 25% by mass, or more than 30% by mass. On the other hands, it is preferably less than 95% by mass, more preferably less than 90% by mass, further preferably less than 85% by mass, from the viewpoint of reinforcing property.

(Other fillers)

As fillers other than silica and carbon black, those conventionally and commonly used in the tire industry can be compounded, such as, for example, aluminum hydroxide, calcium carbonate, alumina, clay, and talc.

A total content of fillers based on 100 parts by mass of the rubber component is preferably 30 parts by mass or more, more preferably 35 parts by mass or more, further preferably 40 parts by mass or more, particularly preferably 45 parts by mass or more, particularly preferably 50 parts by mass or more, from the viewpoint of the effects of the present invention. Moreover, the total content of fillers based on 100 parts by mass of the rubber component is preferably 100 parts by mass or less, more preferably 90 parts by mass or less, further preferably 80 parts by mass or less, particularly preferably 70 parts by mass or less, from the viewpoint of the effects of the present invention.

A content of silica in 100% by mass of the filler is preferably more than 0% by mass, more preferably 3% by mass or more, further preferably 5% by mass or more, particularly preferably 7% by mass or more. Moreover, the content of silica in 100% by mass of the filler is preferably 50% by mass or less, more preferably 40% by mass or less, further preferably more than 30% by mass or less, particularly preferably 25% by mass or less. When the content of silica in the filler in a unit of % by mass is within the above-described ranges, the flexibility of the sidewall rubber in an infinitesimal deformation area is improved, and it is considered that an input from the road surface can be mitigated.

Besides, in a case where the filler consists of carbon black and silica, when the total content of fillers and a content of one of carbon black and silica are determined as described above, the remaining content of the other of silica and carbon black is accordingly determined.

(Silane coupling agent)

Silica may be used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane and NXT-Z100, NXT-Z45, and NXT manufactured by Momentive Performance Materials; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, sulfide-based silane coupling agents and/or mercapto-based silane coupling agents are preferable, and sulfide-based silane coupling agents are more preferable. These silane coupling agents may be used alone, or two or more thereof may be used in combination.

A content of the silane coupling agent when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 10 parts by mass or less, from the viewpoint of preventing deterioration of abrasion resistance.

A content of the silane coupling agent when compounded based on 100 parts by mass of silica is preferably 1 part by mass or more, more preferably 3 parts by mass or more, further preferably 5 parts by mass or more, particularly preferably 8 parts by mass or more, from the viewpoint of enhancing dispersibility of silica. Moreover, it is preferably 20 parts by mass or less, more preferably 18 parts by mass or less, further preferably 16 parts by mass or less, from the viewpoints of cost and processability.

<Other compounding agents>

The rubber composition according to the present embodiment can appropriately comprise compounding agents conventionally and commonly used in the tire industry, such as, for example, a softening agent, wax, processing aid, stearic acid, zinc oxide, an antioxidant, a vulcanizing agent, and a vulcanization accelerator, in addition to the above-described components.

Examples of the softening agent include, for example, a resin component, oil, a liquid rubber, and the like.

Examples of the resin component include, but not particularly limited to, a petroleum resin, a terpene-based resin, a rosin-based resin, a phenol-based resin, and the like which are commonly used in the tire industry. These resin components may be used alone, or two or more thereof may be used in combination.

A content of the resin component when compounded based on 100 parts by mass of the rubber component is preferably 1 part by mass or more, more preferably 2 parts by mass or more, further preferably 3 parts by mass or more, particularly preferably 5 parts by mass, from the viewpoint of the effects of the present invention. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, process oils, vegetable oils and fats, animal oils and fats, and the like. Examples of the process oils include paraffinic process oils, naphthenic process oils, aromatic process oils, and the like. Moreover, a process oil having a low polycyclic-aromatic-compound (PCA) content can also be used for environmental measures. Examples of the process oil having a low PCA content include mild extraction solvates (MES); treated distillate aromatic extracts (TDAE); heavy naphthenic oil; and the like.

A content of oil when compounded based on 100 parts by mass of the rubber component is preferably 1 part by mass or more, more preferably 2 parts by mass or more, further preferably 3 parts by mass or more, particularly preferably 5 parts by mass or more, from the viewpoint of processability. Moreover, it is preferably 100 parts by mass or less, more preferably 80 parts by mass or less, further preferably 60 parts by mass or less, from the viewpoint of abrasion resistance.

The liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 30 parts by mass or less.

A total content of the softening agent based on 100 parts by mass of the rubber component is preferably 1 part by mass or more, more preferably 2 parts by mass or more, further preferably 3 parts by mass or more, particularly preferably 5 parts by mass or more, from the viewpoint of the effects of the present invention. Moreover, the total content of the softening agent is preferably 100 parts by mass or less, more preferably 80 parts by mass or less, further preferably 60 parts by mass or less.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the vulcanizing-agent in a case where an oil-containing sulfur is used as the vulcanizing agent shall be a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and the like. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and the sulfenamide-based accelerator is more preferable, from the viewpoint that desired effects can be obtained more appropriately.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition according to the present embodiment can be produced by a known method. For example, it can be produced by kneading the respective above-described components with a rubber kneading machine such as an open roll and a sealed type kneader (a Banbury mixer, a kneader, and the like).

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step also can be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire according to the present embodiment comprising the sidewall composed of the rubber composition can be produced by a usual method. That is, the tire can be produced by extruding an unvulcanized rubber composition, in which the above-described components are compounded for a rubber component as appropriate, into a shape of the sidewall, attaching it together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

<Application>

The tire according to the present embodiment can be appropriately used as a tire for a passenger car, a tire for a truck/bus, a tire for a two-wheeled vehicle, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire according to the present embodiment can be used as an all-season tire, a summer tire, or a winter tire such as a studless tire.

EXAMPLES

Hereinafter, the present invention will be described based on Examples, though the present invention is not limited to only these Examples.

Various chemicals used in Examples and Comparative examples are collectively shown below.

NR: TSR 20

SBR: HPR840 manufactured by JSR Corporation (S-SBR, styrene content: 10% by mass, vinyl content: 42 mol%, Mw: 190,000, Tg: -60°C)

Multi-component polymer: hydrogenated SBR produced in Production example 1 described below (hydrogenation rate: 80%, styrene content: 35% by mass, Mw: 480,000, Tg: -30°C)

BR: Ubepol BR (Registered Trademark) 150B manufactured by Ube Industries, Ltd. (cis content: 97 mol%, Mw: 440,000)

Carbon black 1: DIABLACK (Registered Trademark) E manufactured by Mitsubishi Chemical Corporation (FEF, N550, $N_2SA$: 41 $m^2/g$, average primary particle size: 81 nm)

Carbon black 2: SS550 manufactured by Strebl Green Carbon Pte Ltd. (carbon black obtained by a pyrolysis process of a tire)

Silica 1: Ultrasil VN3 manufactured by Evonik Degussa GmbH ($N_2SA$: 175 $m^2/g$, average primary particle size: 18 nm)

Silica 2: K185 manufactured by Wilmar international LTD. (amorphous silica purified from rice husks)

Silane coupling agent: Si69 manufactured by Evonik Degussa GmbH (bis(3-triethoxysilylpropyl)tetrasulfide)

Oil: VivaTec 500 manufactured by H&R Group (TDAE oil)

Wax: OZOACE 0355 manufactured by Nippon Seiro Co., Ltd.

Antioxidant 1: Nocrac 6C manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Zinc oxide: Zinc oxide No. 1 manufactured by Mitsui Mining & Smelting Co., Ltd.

Stearic acid: Bead stearic acid "CAMELLIA" manufactured by NOF CORPORATION

Sulfur: HK-200-5 manufactured by Hosoi Chemical Industry Co., Ltd. (5% oil-containing powdered sulfur)

Vulcanization accelerator: Nocceler CZ manufactured by Ouchi Shinko Chemical Industry Co., Ltd. (N-cyclohexyl-2-benzothiazolylsulfenamide (CBS))

Production example 1: Production of hydrogenated SBR

To a heat-resistant reaction vessel sufficiently subjected to nitrogen purge, 2000 mL of n-hexane, 60 g of styrene, 140 g of butadiene, 0.93 g of THF, and 0.45 mmol of n-butyllithium were added, and the mixture was stirred at 50°C for 5 hours to perform a polymerization reaction. Next, the mixture was stirred for 20 minutes while supplying a hydrogen gas at a pressure of 0.4 MPa-Gauge and reacted with an unreacted polymer terminal lithium into lithium hydride. Hydrogenation was performed using a catalyst mainly composed of titanocenedichloride with a hydrogen gas-supplying pressure at 0.7 MPa-Gauge and a reaction temperature at 90°C. When hydrogen absorption reached an integrated amount of an intended hydrogenation rate, the reaction temperature was set to a normal temperature and the hydrogen pressure is returned to a normal pressure to extract the hydrogen gas from the reaction vessel, and the reaction solution was charged and stirred in water to remove the solvent by steam stripping, thereby obtaining a hydrogenated SBR.

(Examples and Comparative examples)

According to the compounding formulations shown in Tables 1-1, 1-2, 1-3, and 2, using a 1.7 L closed Banbury mixer, chemicals other than sulfur and a vulcanization accelerator were kneaded for 5 minutes until the temperature reached a discharge temperature of 170°C, to obtain a kneaded product. Next, using a twin-screw open roll, sulfur and the vulcanization accelerator were added to the obtained kneaded product, and the mixture was kneaded for 4 minutes until the temperature reached 105°C, to obtain an unvulcanized rubber composition. The obtained unvulcanized rubber composition was extruded into a shape of a sidewall using an extruder equipped with a mouthpiece having a predetermined shape and attached together with other tire members to produce an unvulcanized tire, and the unvulcanized tire was press-vulcanized under a condition of 170°C for 12 minutes, thereby producing each test tire.

The following evaluations of obtained test tires were carried out. Evaluation results are shown in Table 1-1, 1-2, 1-3, and 2.

<Ride comfort>

Each test tire in mint condition and each test tire after abrasion were filled with air at a pressure of 250kPa and mounted on four wheels of an FF passenger vehicle with a displacement of 2000 cc, and the FF passenger vehicle was run on a test course with a dry asphalt road surface. Ride comfort was evaluated based on feeling of each of test drivers during straight running, changing lanes, and accelerating/decelerating when running at 120 km/hour. The evaluations were performed using an integer value of 1 to 10 points, and based on evaluation criteria that the higher the score is, the better the ride comfort is, a total score by 10 test drivers was calculated. A total score of a control tire (Comparative example 2) was converted into a reference value (100), and an evaluation result for each test tire was indicated as an index in proportion to the total score. The results show that the higher the numerical value is, the better the ride comfort is.

Besides, after a tread part of each test tire in mint condition was abraded along a tread radius such that the depth of the deepest main groove of the abraded tire became equal to 50% of the depth of the deepest main groove of the tire in mint condition, this tire was subjected to heat deterioration at 80°C for 7 days, thereby producing each test tire after abrasion.

Table 1-1

| Compounding amount (part by mass) | Example | | | | | | | |
|---|---|---|---|---|---|---|---|---|
| | 1 | 2 | 3 | 4 | 5 | 6 | 7 | 8 |
| NR | 65 | 55 | 40 | 45 | 40 | 55 | 40 | 40 |
| SBR | 10 | 20 | 35 | - | 35 | 20 | 35 | 35 |
| Multi-component polymer | - | - | - | 10 | - | - | - | - |
| BR | 25 | 25 | 25 | 45 | 25 | 25 | 25 | 25 |
| Carbon black 1 | 65 | 65 | 65 | 65 | 65 | 65 | 65 | 40 |
| Silica 1 | - | - | - | - | - | - | - | 10 |
| Silane coupling agent | - | - | - | - | - | - | - | 0.8 |
| Oil | 5.0 | 5.0 | 5.0 | 5.0 | 5.0 | 5.0 | 5.0 | 5.0 |
| Wax | 1.0 | 1.0 | 1.0 | 1.0 | 1.0 | 1.0 | 1.0 | 1.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Sulfur | 1.8 | 1.8 | 1.8 | 1.8 | 1.8 | 1.8 | 1.8 | 1.8 |
| Vulcanization accelerator | 1.0 | 1.0 | 1.0 | 1.0 | 1.0 | 1.0 | 1.0 | 1.0 |
| Aromatic vinyl unit content S in rubber component (% by mass) | 1.0 | 2.0 | 3.5 | 3.5 | 3.5 | 2.0 | 3.5 | 3.5 |
| Content of silica in filler (% by mass) | 0 | 0 | 0 | 0 | 0 | 0 | 0 | 20 |
| T (mm) | 5.0 | 5.1 | 5.0 | 5.0 | 2.6 | 1.0 | 2.5 | 2.4 |
| S/T | 0.20 | 0.39 | 0.70 | 0.70 | 1.35 | 2.00 | 1.40 | 1.46 |
| Tire size | 215/45R18 | 215/45R18 | 215/45R18 | 215/45R18 | 215/45R18 | 215/45R18 | 215/45R18 | 215/45R18 |
| G (kg) | 8.5 | 8.6 | 8.2 | 8.1 | 8.2 | 8.2 | 7.9 | 7.8 |
| $W_L$ (kg) | 580 | 580 | 580 | 580 | 580 | 580 | 580 | 580 |
| $GT/W_L$ | 0.0147 | 0.0148 | 0.0141 | 0.0140 | 0.0141 | 0.0141 | 0.0136 | 0.0134 |
| Value of inequality (1) | 1664 | 1664 | 1664 | 1664 | 1664 | 1664 | 1664 | 1664 |

| Index | Example | | | | | | | |
|---|---|---|---|---|---|---|---|---|
| | 1 | 2 | 3 | 4 | 5 | 6 | 7 | 8 |
| Ride comfort in mint condition | 110 | 118 | 116 | 114 | 120 | 122 | 126 | 130 |
| Ride comfort after abrasion | 120 | 118 | 124 | 130 | 128 | 126 | 130 | 138 |

- continued -

| | Example | | | | | | |
|---|---|---|---|---|---|---|---|
| | 9 | 10 | 11 | 12 | 13 | 14 | 15 |
| Compounding amount (part by mass) | | | | | | | |
| NR | 35 | 35 | 35 | 65 | 45 | 45 | 40 |
| SBR | - | - | - | 10 | - | - | 35 |
| Multi-component polymer | 14 | 14 | 14 | - | 10 | 10 | - |
| BR | 51 | 51 | 51 | 25 | 45 | 45 | 25 |
| Carbon black 1 | 65 | 55 | 40 | 65 | 65 | 65 | 40 |
| Silica 1 | - | 5.0 | 10 | - | - | - | 10 |
| Silane coupling agent | - | 0.4 | 0.8 | - | - | - | 0.8 |
| Oil | 5.0 | 5.0 | 5.0 | 5.0 | 5.0 | 5.0 | 5.0 |
| Wax | 1.0 | 1.0 | 1.0 | 1.0 | 1.0 | 1.0 | 1.0 |
| Antioxidant 1 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 |
| Sulfur | 1.8 | 1.8 | 1.8 | 1.8 | 1.8 | 1.8 | 1.8 |
| Vulcanization accelerator | 1.0 | 1.0 | 1.0 | 1.0 | 1.0 | 1.0 | 1.0 |
| Aromatic vinyl unit content S in rubber component (% by mass) | 4.9 | 4.9 | 4.9 | 1.0 | 3.5 | 3.5 | 3.5 |
| Content of silica in filler (% by mass) | 0 | 8.3 | 20 | 0 | 0 | 0 | 20 |
| T (mm) | 2.5 | 2.3 | 2.1 | 11.0 | 3.6 | 3.6 | 2.1 |
| S/T | 1.96 | 2.13 | 2.33 | 0.091 | 0.97 | 0.97 | 1.67 |
| Tire size | 215/45R18 | 215/45R18 | 215/45R18 | 215/45R18 | 205/55R17 | 195/65R16 | 195/65R16 |
| G (kg) | 8.1 | 8.1 | 8.0 | 9.0 | 8.1 | 7.8 | 7.6 |
| $W_L$ (kg) | 580 | 580 | 580 | 580 | 615 | 630 | 630 |
| GT/$W_L$ | 0.0140 | 0.0140 | 0.0138 | 0.0155 | 0.0132 | 0.0124 | 0.0121 |
| Value of inequality (1) | 1664 | 1664 | 1664 | 1664 | 1784 | 1900 | 1900 |

- continued -

- continued -

| | Example | | | | | | |
|---|---|---|---|---|---|---|---|
| | 9 | 10 | 11 | 12 | 13 | 14 | 15 |
| Index | | | | | | | |
| Ride comfort in mint condition | 120 | 124 | 128 | 108 | 118 | 128 | 134 |
| Ride comfort after abrasion | 134 | 136 | 140 | 110 | 138 | 140 | 140 |

Table 1-2

| | Example | | | | | | | |
|---|---|---|---|---|---|---|---|---|
| | 16 | 17 | 18 | 19 | 20 | 21 | 22 | 23 |
| Compounding amount (part by mass) | | | | | | | | |
| NR | 40 | 40 | 40 | 40 | 40 | 40 | 40 | 40 |
| SBR | 35 | 35 | 35 | 35 | 35 | 35 | 35 | 35 |
| Multi-component polymer | - | - | - | - | - | - | - | - |
| BR | 25 | 25 | 25 | 25 | 25 | 25 | 25 | 25 |
| Carbon black 1 | 30 | 20 | 10 | 20 | 30 | 20 | 10 | 20 |
| Carbon black 2 | 10 | 20 | 30 | 20 | - | 10 | 20 | 10 |
| Silica 1 | 10 | 10 | 10 | - | 10 | 10 | 10 | - |
| Silica 2 | - | - | - | 10 | - | - | - | 10 |
| Silane coupling aqent | 0.8 | 0.8 | 0.8 | 0.8 | 0.8 | 0.8 | 0.8 | 0.8 |
| Oil | 5.0 | 5.0 | 5.0 | 5.0 | 5.0 | 5.0 | 5.0 | 5.0 |
| Wax | 1.0 | 1.0 | 1.0 | 1.0 | 1.0 | 1.0 | 1.0 | 1.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Sulfur | 1.8 | 1.8 | 1.8 | 1.8 | 1.8 | 1.8 | 1.8 | 1.8 |
| Vulcanization accelerator | 1.0 | 1.0 | 1.0 | 1.0 | 1.0 | 1.0 | 1.0 | 1.0 |
| Aromatic vinyl unit content S in rubber component (% by mass) | 3.5 | 3.5 | 3.5 | 3.5 | 3.5 | 3.5 | 3.5 | 3.5 |
| Content of silica in filler (% by mass) | 20 | 20 | 20 | 20 | 25 | 25 | 25 | 25 |
| T (mm) | 2.5 | 2.6 | 2.5 | 2.4 | 2.5 | 2.4 | 2.4 | 2.5 |
| S/T | 1.40 | 1.35 | 1.40 | 1.46 | 1.40 | 1.46 | 1.46 | 1.40 |
| Tire size | 215/45R18 | 215/45R18 | 215/45R18 | 215/45R18 | 215/45R18 | 215/45R18 | 215/45R18 | 215/45R18 |
| G (kg) | 7.9 | 7.9 | 7.8 | 7.8 | 7.7 | 7.7 | 7.8 | 7.7 |
| $W_L$ (kq) | 580 | 580 | 580 | 580 | 580 | 580 | 580 | 580 |
| | Example | | | | | | | |
| | 16 | 17 | 18 | 19 | 20 | 21 | 22 | 23 |
| GT/$W_L$ | 0.0136 | 0.0136 | 0.0134 | 0.0134 | 0.0133 | 0.0133 | 0.0134 | 0.0133 |

(continued)

| Index | | Example | | | | | | | |
|---|---|---|---|---|---|---|---|---|---|
| | | 16 | 17 | 18 | 19 | 20 | 21 | 22 | 23 |
| | Value of inequality (1) | 1664 | 1664 | 1664 | 1664 | 1664 | 1664 | 1664 | 1664 |
| | Ride comfort in mint condition | 128 | 130 | 128 | 128 | 136 | 134 | 136 | 136 |
| | Ride comfort after abrasion | 138 | 138 | 136 | 138 | 140 | 142 | 140 | 142 |

Table 1-3

| | Example | | | | | | | | |
|---|---|---|---|---|---|---|---|---|---|
| | 24 | 25 | 26 | 27 | 28 | 29 | 30 | 31 | 32 |
| Compounding amount (part by mass) | | | | | | | | | |
| NR | 60 | 60 | 60 | 60 | 60 | 60 | 60 | 60 | 60 |
| R | - | - | - | - | - | - | - | - | - |
| Multi-component polymer | 14 | 14 | 14 | 14 | 14 | 14 | 14 | 14 | 14 |
| BR | 26 | 26 | 26 | 26 | 26 | 26 | 26 | 26 | 26 |
| Carbon black 1 | 40 | 30 | 20 | 10 | 20 | 26 | 26 | 26 | 26 |
| Carbon black 2 | - | 10 | 20 | 30 | 20 | 30 | 20 | 10 | 20 |
| Silica 1 | 10 | 10 | 10 | 10 | - | - | 10 | 20 | 10 |
| Silica 2 | - | - | - | - | 10 | 10 | 10 | 10 | - |
| Silane coupling agent | 0.8 | 0.8 | 0.8 | 0.8 | 0.8 | 0.8 | 0.8 | 0.8 | 0.8 |
| Oil | 5.0 | 5.0 | 5.0 | 5.0 | 5.0 | 5.0 | 5.0 | 5.0 | 5.0 |
| Wax Antioxidant 1 | 1.0 | 1.0 | 1.0 | 1.0 | 1.0 | 1.0 | 1.0 | 1.0 | 5.0 |
| | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 1.0 | 1.0 | 1.0 | 1.0 |
| Stearic acid | 2.0 | 2.0 | 2.0 | 2.0 | 2.0 | 2.0 | 2.0 | 2.0 | 2.0 |
| Sulfur | 1.8 | 1.8 | 1.8 | 1.8 | 1.8 | 2.0 | 2.0 | 2.0 | 2.0 |
| Vulcanization accelerator | 1.0 | 1.0 | 1.0 | 1.0 | 1.0 | 1.0 | 1.0 | 1.0 | 1.0 |
| Aromatic vinyl unit content S in rubber component (% by mass) | 4.9 | 4.9 | 4.9 | 4.9 | 4.9 | 4.9 | 4.9 | 4.9 | 4.9 |
| Content of silica in filler (% by mass) | 20 | 20 | 20 | 20 | 20 | 25 | 25 | 25 | 25 |
| T (mm) | 2.0 | 2.1 | 2.0 | 2.1 | 2.1 | 2.0 | 2.1 | 2.0 | 2.1 |
| S/T | 2.45 | 2.33 | 2.45 | 2.33 | 2.33 | 2.45 | 2.33 | 2.45 | 2.33 |
| Tire size | 215/45R18 | 215/45R18 | 215/45R18 | 215/45R18 | 215/45R18 | 215/45R18 | 215/45R18 | 215/45R18 | 215/45R18 |
| G (kq) | 8.0 | 8.1 | 8.0 | 8.1 | 8.0 | 8.0 | 8.0 | 8.0 | 8.0 |
| $W_L$ (kg) | 580 | 580 | 580 | 580 | 580 | 580 | 580 | 580 | 580 |
| GT/$W_L$ | 0.0138 | 0.0140 | 0.0138 | 0.0140 | 0.0138 | 0.0138 | 0.0138 | 0.0138 | 0.0138 |
| Value of inequality (1) | 1664 | 1664 | 1664 | 1664 | 1664 | 1664 | 1664 | 1664 | 1664 |

| Index | | | | | | | | | |
|---|---|---|---|---|---|---|---|---|---|
| Ride comfort in mint condition | 130 | 130 | 132 | 130 | 130 | 136 | 138 | 136 | 136 |
| Ride comfort after abrasion | 140 | 138 | 140 | 138 | 140 | 144 | 144 | 144 | 146 |

Table 2

| | Comparative example | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | 70 | 10 | 25 | 30 | 30 | 30 | 30 | 30 |
| SBR | - | 60 | 45 | 60 | 60 | 60 | 60 | 60 |
| Multi-component polymer | - | - | - | - | - | - | - | - |
| BR | 30 | 30 | 30 | 10 | 10 | 10 | 10 | 10 |
| Carbon black 1 | 65 | 65 | 65 | 65 | 65 | 65 | 65 | 45 |
| Silica 1 | - | - | - | - | - | - | - | 5.0 |
| Silane coupling agent | - | - | - | - | - | - | - | 0.4 |
| Oil | 5.0 | 5.0 | 5.0 | 5.0 | 5.0 | 5.0 | 5.0 | 5.0 |
| Wax | 1.0 | 1.0 | 1.0 | 1.0 | 1.0 | 1.0 | 1.0 | 1.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Sulfur | 1.8 | 1.8 | 1.8 | 1.8 | 1.8 | 1.8 | 1.8 | 1.8 |
| Vulcanization accelerator | 1.0 | 1.0 | 1.0 | 1.0 | 1.0 | 1.0 | 1.0 | 1.0 |
| Aromatic vinyl unit content $S$ in rubber component (% by mass) | 0 | 6.0 | 4.5 | 6.0 | 6.0 | 6.0 | 6.0 | 6.0 |
| Content of silica in filler (% by mass) | 0 | 0 | 0 | 0 | 0 | 0 | 0 | 10 |
| T (mm) | 6.0 | 6.0 | 1.2 | 5.0 | 2.3 | 2.3 | 2.3 | 2.2 |
| S/T | 0 | 1.00 | 3.75 | 1.20 | 2.61 | 2.61 | 2.61 | 2.73 |
| Tire size | 215/45R18 | 215/45R18 | 215/45R18 | 195/65R16 | 215/45R18 | 215/45R18 | 215/45R18 | 215/45R18 |
| G (kg) | 8.5 | 8.4 | 8.0 | 7.9 | 7.5 | 7.5 | 7.5 | 7.5 |
| $W_L$ (kg) | 580 | 580 | 580 | 630 | 580 | 580 | 580 | 580 |
| $GT/W_L$ | 0.0147 | 0.0145 | 0.0138 | 0.0125 | 0.0129 | 0.0129 | 0.0129 | 0.0129 |
| Value of inequality (1) | 1664 | 1664 | 1664 | 1900 | 1664 | 1664 | 1664 | 1664 |
| Index | | | | | | | | |
| Ride comfort in mint condition | 98 | 100 | 100 | 98 | 96 | 98 | 98 | 96 |

24

(continued)

| Index | | | | | | | | |
|---|---|---|---|---|---|---|---|---|
| Ride comfort after abrasion | 100 | 100 | 98 | 98 | 94 | 96 | 98 | 98 |

From the results shown in Tables 1-1, 1-2, 1-3, and 2, it can be found that the tire of the present invention, in which an aromatic vinyl unit content in a rubber component constituting a sidewall and a thickness of the sidewall at a tire maximum width position are set to be in a predetermined relationship, improves in total performance of ride comfort in mint condition and ride comfort after abrasion (an average value of a ride comfort index in mint condition and a ride comfort index after abrasion).

<Embodiments>

Examples of embodiments of the present invention are described below.

[1] A tire comprising a sidewall,

wherein the sidewall is composed of a rubber composition comprising a rubber component, and
wherein, when an aromatic vinyl unit content in the rubber component is defined as S (% by mass) and a thickness of a surface rubber layer at a tire maximum width position is defined as T(mm), S is 0.50% by mass or more and 5.0% by mass or less (preferably 0.60% by mass or more and 5.0% by mass or less, more preferably 0.90% by mass or more and 4.9% by mass or less, further preferably 1.2% by mass or more and 4.9% by mass or less), and S/T is 0.045 or more and 3.33 or less (preferably 0.065 or more and 3.00 or less, more preferably 0.10 or more and 2.80 or less, further preferably 0.15 or more and 2.60 or less, particularly preferably 0.20 or more and 2.40 or less).

[2] The tire of [1] above, wherein the rubber component comprises a multi-component polymer having aromatic vinyl units, non-conjugated olefin units, and conjugated diene units.
[3] The tire of [1] or [2] above, wherein the rubber component comprises 15% by mass or more and 65% by mass or less (preferably 25% by mass or more and 60% by mass or less) of an isoprene-based rubber.
[4] The tire of any one of [1] to [3] above, wherein the rubber component comprises 20% by mass or more and 60% by mass or less (preferably 25% by mass or more and 55% by mass or less) of a butadiene rubber.
[5] The tire of any one of [1] to [4] above, wherein the rubber composition comprises 35 parts by mass or more and 70 parts by mass or less (preferably 40 parts by mass or more and 65 parts by mass or less) of a filler comprising carbon black and/or silica based on 100 parts by mass of the rubber component.
[6] The tire of [5] above, wherein a content of the silica in 100% by mass of the filler is 5% by mass or more and 30% by mass or less (preferably 7% by mass or more and 25% by mass or less).
[7] The tire of any one of [1] to [6] above, wherein, when a tire weight is defined as G (kg) and a maximum load capacity of the tire is defined as $W_L$ (kg), $G/W_L$ is 0.0210 or less (preferably 0.0180 or less, more preferably 0.0165 or less, further preferably 0.0150 or less).
[8] The tire of any one of [1] to [7] above, wherein a tire cross-sectional width Wt (mm) and a tire outer diameter Dt (mm) satisfy the following inequality (1).

$$(\pi/4) \times (Dt^2/Wt) \geq 1600 \quad \cdots \quad (1)$$

[9] The tire of any one of [1] to [8] above, wherein the filler comprises a recycled carbon black.
[10] The tire of any one of [1] to [9] above, wherein the filler comprises silica made from a biomass material (preferably amorphous silica purified from rice husks).

REFERENCE SIGNS LIST

1    Tread
2    Belt
3    Band
21   Bead core
22   Bead apex
23   Rim cushion
24   Clinch apex
25   Strip apex
31   Sidewall

32     Inner liner
33     Carcass
CL    Tire equatorial plane

**Claims**

1. A tire comprising a sidewall,

   wherein the sidewall is composed of a rubber composition comprising a rubber component, and
   wherein, when an aromatic vinyl unit content in the rubber component is defined as S (% by mass) and a thickness of a surface rubber layer at a tire maximum width position is defined as T(mm), S is 0.50% by mass or more and 5.0% by mass or less, and S/T is 0.045 or more and 3.33 or less.

2. The tire of claim 1, wherein the rubber component comprises a multi-component polymer having aromatic vinyl units, non-conjugated olefin units, and conjugated diene units.

3. The tire of claim 1 or 2, wherein the rubber component comprises 15% by mass or more and 65% by mass or less of an isoprene-based rubber.

4. The tire of any one of claims 1 to 3, wherein the rubber component comprises 20% by mass or more and 60% by mass or less of a butadiene rubber.

5. The tire of any one of claims 1 to 4, wherein the rubber composition comprises 35 parts by mass or more and 70 parts by mass or less of a filler comprising carbon black and/or silica based on 100 parts by mass of the rubber component.

6. The tire of claim 5, wherein a content of the silica in 100% by mass of the filler is 5% by mass or more and 30% by mass or less.

7. The tire of any one of claims 1 to 6, wherein, when a tire weight is defined as G (kg) and a maximum load capacity of the tire is defined as $W_L$ (kg), $G/W_L$ is 0.0210 or less.

8. The tire of any one of claims 1 to 7, wherein a tire cross-sectional width Wt (mm) and a tire outer diameter Dt (mm) satisfy the following inequality (1).

$$(\pi/4) \times (Dt^2/Wt) \geq 1600 \cdots (1)$$

9. The tire of any one of claims 1 to 8, wherein the filler comprises a recycled carbon black.

10. The tire of any one of claims 1 to 9, wherein the filler comprises silica made from a biomass material.

# FIG. 1

# FIG.2

Europäisches
Patentamt

European
Patent Office

Office européen
des brevets

# EUROPEAN SEARCH REPORT

Application Number

EP 22 20 2356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 112 331 A1 (SUMITOMO RUBBER IND [JP]) 4 January 2023 (2023-01-04) <br> * paragraph [0001] * <br> * paragraph [0006] – paragraph [0007] * <br> * paragraph [0147] – paragraph [0150] * <br> * paragraph [0165] * <br> * example blending formula 22; table 5 * <br> * examples 2-4; table 6 * <br> * examples 1-7; table 7 * <br> * examples 8-14; table 8 * <br> ----- | 1,3-5 | INV. <br> B60C1/00 <br> C08L7/00 <br> C08L9/00 <br><br> ADD. <br> C08C19/02 <br> C08F236/10 |
| A | US 2007/012391 A1 (WILLARD WALTER L JR [US]) 18 January 2007 (2007-01-18) <br> * paragraph [0002] * <br> * paragraph [0010] * <br> * paragraph [0015] – paragraph [0019] * <br> * paragraph [0054] * <br> * paragraph [0070] – paragraph [0075] * <br> ----- | 1-10 | |
| A | JP 5 280832 B2 (SUMITOMO RUBBER IND) 4 September 2013 (2013-09-04) <br> * paragraph [0001] – paragraph [0002] * <br> * paragraph [0005] * <br> * paragraph [0032] * <br> * paragraph [0058] * <br> * paragraph [0060] * <br> * examples 1-3, comparative examples 1-2; table 1 * <br> ----- | 1-10 | TECHNICAL FIELDS SEARCHED (IPC) <br><br> B60C <br> C08L <br> C08C <br> C08F |

The present search report has been drawn up for all claims

| Place of search | Date of completion of the search | Examiner |
|---|---|---|
| Munich | 7 March 2023 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 2356

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2023

| Patent document cited in search report | | Publication date | Patent family member(s) | | Publication date |
|---|---|---|---|---|---|
| EP 4112331 | A1 | 04-01-2023 | CN | 115534590 A | 30-12-2022 |
| | | | EP | 4112331 A1 | 04-01-2023 |
| | | | JP | 2023006034 A | 18-01-2023 |
| US 2007012391 | A1 | 18-01-2007 | AT | 394250 T | 15-05-2008 |
| | | | CN | 1902063 A | 24-01-2007 |
| | | | EP | 1701855 A1 | 20-09-2006 |
| | | | FR | 2864469 A1 | 01-07-2005 |
| | | | JP | 5124143 B2 | 23-01-2013 |
| | | | JP | 2007516883 A | 28-06-2007 |
| | | | KR | 20060111654 A | 27-10-2006 |
| | | | US | 2007012391 A1 | 18-01-2007 |
| | | | WO | 2005072992 A1 | 11-08-2005 |
| JP 5280832 | B2 | 04-09-2013 | JP | 5280832 B2 | 04-09-2013 |
| | | | JP | 2010149677 A | 08-07-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013001889 A
- JP 2018083884 A
- WO 2018092733 A
- JP 2009002594 A
- EP 3427975 A
- JP 6856781 B
- EP 3173251 A

### Non-patent literature cited in the description

- *Akita Prefectural University Web Journal B,* 2019, vol. 6, 216-222
- *Rubber Chemistry and Technology,* 2012, vol. 85 (3), 408-449
- A comparison of surface morphology and chemistry of pyrolytic carbon blacks with commercial carbon blacks. *Powder Technology,* 2005, vol. 160, 190-193